# EUROPÄISCHE PATENTANMELDUNG

(11) **EP 1 884 325 A1**
(43) Veröffentlichungstag der Anmeldung: **06.02.2008**
(21) Anmeldenummer: 06015878.9
(22) Anmeldetag: 31.07.2006
(51) Int. Cl.: B25F 5/00, B23D 59/00, B23D 61/02, B24D 5/16, B24B 49/10

(54) **Motorisch angetriebenes Werkzeuggerät und Werkzeug hierfür**

(71) Anmelder: Metabowerke GmbH, 72622 Nürtingen (DE); August Rüggeberg GmbH & Co. KG, 51709 Marienheide (DE)
(72) Erfinder: Schmohl, Michael, 72119 Ammerbuch (DE); Stickel, Wolfgang, 72660 Beuren (DE); Wiesner, Bernd, 73277 Owen (DE); Jahn, Christian, 72555 Metzingen (DE); Küther, Ludwig, 71111 Waldenbuch (DE); Nierich, Jürgen, 51580 Reichshof-Oberagger (DE); Schmitz, Rudolf, 51702 Bergneustadt (DE)
(74) Vertreter: Dreiss, Fuhlendorf, Steimle & Becker

(57) **Zusammenfassung**

Die Erfindung betrifft ein motorisch angetriebenes Werkzeuggerät mit einem Gehäusekörper und einem am Gehäusekörper montierbaren und rotierend, oszillierend oder hin- und hergehend antreibbaren Werkzeug (2), insbesondere eine Schleif-, Trenn- oder Schruppscheibe, und mit einer elektrischen oder elektronischen Steuereinrichtung (22); erfindungsgemäß weist das Werkzeug (2) ein Codiermittel (10) auf, welches über ein mit der Steuereinrichtung (22) zusammenwirkendes Sensormittel (16) am Gehäusekörper des Werkzeuggeräts berührungslos identifizierbar ist, und über die Steuereinrichtung (22) sind in Abhängigkeit von der Identifizierung Steuerungsmaßnahmen ausführbar.

## Beschreibung

Die Erfindung betrifft ein motorisch angetriebenes Werkzeuggerät, insbesondere ein handgeführtes Werkzeuggerät, mit einem Gehäusekörper und einem am Gehäusekörper montierbaren und rotierend, oszillierend oder hin- und hergehend antreibbaren Werkzeug, insbesondere eine Schleif-, Trenn- oder Schruppscheibe, und mit einer elektrischen oder elektronischen Steuereinrichtung. Ferner betrifft die Erfindung ein Werkzeug für ein solches Werkzeuggerät.

Gerade bei Winkelschleifern gibt es Werkzeuge, also rotierend antreibbare Schleif- oder Trennscheiben, mit unterschiedlichen Geschwindigkeitszulassungen. Beispielsweise sind normale Schleifscheiben für Winkelschleifer für eine Umfangsgeschwindigkeit von beispielsweise 80 m/s ausgelegt. Es gibt jedoch auch moderne Schleifscheiben, die bestimmungsgemäß bei Geschwindigkeiten von bis zu 100 m/s betrieben werden können. Die zuletzt genannten Schleifscheiben sollten bei einem Werkzeuggerät verwendet werden, welches für eine solche Umfangsgeschwindigkeit auch geeignet ist, da sie anderenfalls beim Betrieb mit einer üblichen geringeren Geschwindigkeit von beispielsweise 80 m/s, für den Anwender keinen Vorteil bringen. Andererseits sollte aber verhindert werden, dass Schleifscheiben für geringere Umfangsgeschwindigkeiten bei Werkzeuggeräten mit demgegenüber höherer Antriebs- bzw. Umfangsgeschwindigkeit betrieben werden, da dies zur Zerstörung der Schleifscheibe und damit einhergehend zu einer erheblichen Verletzungsgefahr für den Anwender oder für umstehende Personen führen könnte.

Eine sichere Unterscheidung unterschiedlicher Werkzeuge ist aber bislang nicht möglich. Die vorliegende Erfindung stellt sich die Aufgabe, hier Abhilfe zu schaffen.

Diese Aufgabe wird bei einem Werkzeuggerät der eingangs genannten Art erfindungsgemäß dadurch gelöst, dass das Werkzeug ein Codiermittel aufweist, welches über ein mit der Steuereinrichtung zusammenwirkendes Sensormittel am Gehäusekörper des Werkzeuggeräts berührungslos identifizierbar ist, und dass über die Steuereinrichtung in Abhängigkeit von der Identifizierung Steuerungsmaßnahmen ausführbar sind.

Es wird also erfindungsgemäß vorgeschlagen, eine automatische Identifizierung, also Erkennung eines Werkzeugs vorzusehen, indem in oder an dem Werkzeug ein Codiermittel vorgesehen wird, welches vorgegebene Werkzeugtypen oder werkzeugspezifische Eigenschaften im weitesten Sinne codiert und unter Verwendung des Sensormittels identifizierbar macht. Es soll so weitgehend sichergestellt werden, dass rotierend, oszillierend oder hin- und hergehend antreibbare Werkzeuge ihren werkzeugspezifischen Eigenschaften entsprechend betrieben werden und dass Fehlverwendungen, zumindest weitgehend, ausgeschlossen werden.

Nach einer ersten Ausführungsform der Erfindung betreffen die über die Steuereinrichtung des Werkzeuggeräts eingeleiteten Steuerungsmaßnahmen die Wahl einer Antriebsstufe für den motorischen Antrieb des Werkzeugs. Wird also beispielsweise ein Werkzeug, beispielsweise eine Schleifscheibe, erkannt, die der Codierung entsprechend für eine erste Umfangsgeschwindigkeit von beispielsweise 80 m/s geeignet und bestimmt ist, so kann über die Steuereinrichtung eine hierfür geeignete Antriebsstufe bzw. Antriebsgeschwindigkeit für den Betrieb des Werkzeuggeräts ausgewählt werden. Wird hingegen eine Eignung für eine demgegenüber höhere Geschwindigkeit von beispielsweise 100 m/s erkannt, so kann eine andere höhere Antriebsstufe ausgewählt werden.

Nach einer weiteren Ausführungsform der Erfindung können die Steuerungsmaßnahmen in vorteilhafter Weise die Anzeige der Identifizierung umfassen. Beispielsweise kann auf einem Display visuell oder über ein Lautsprechermittel akustisch die Identifizierung angezeigt oder vermittelt werden.

Nach einer weiteren Ausführungsform der Erfindung können die Steuerungsmaßnahmen auch die Anzeige eines Warnhinweises umfassen. Dies erweist sich beispielsweise als vorteilhaft, wenn das verwandte Elektrohandwerkzeuggerät beispielsweise nur eine einzige hohe Antriebsgeschwindigkeit aufweist, die für den erkannten Werkzeugtyp zu hoch ist, oder wenn eine teure Hochgeschwindigkeitsschleifscheibe erkannt wird, das verwandte Werkzeuggerät jedoch nur über einen Antrieb für eine geringe Geschwindigkeit verfügt.

Im Zentrum der vorliegenden Erfindung liegen jedoch Werkzeuggeräte, bei denen unter Verwendung der in das Werkzeuggerät integrierten Steuereinrichtung ein auf die detektierten und identifizierten werkzeugspezifischen Eigenschaften optimaler Betrieb selbsttätig vorgegeben werden kann.

Nach einer bevorzugten Ausführungsform des erfindungsgemäßen Werkzeuggeräts dient das Codiermittel wie bereits erwähnt zur Unterscheidung zweier verschiedener maximaler Antriebsgeschwindigkeiten. Es wird aber ausdrücklich darauf hingewiesen, dass das Codiermittel auch andere werkzeugspezifische Eigenschaften codieren und dabei berührungslos identifizierbar machen kann.

Das Codiermittel kann beispielsweise ein magnetisches oder magnetisierbares Material umfassen; es kann nach dieser Ausführungsform der Erfindung beispielsweise einen ferromagnetischen Werkstoff umfassen, der vorzugsweise unlösbar an dem Werkzeug befestigt oder in das Werkzeug integriert, insbesondere einlaminiert ist.

Das Sensormittel ist in vorteilhafter Weise so am Gehäusekörper des Werkzeuggeräts angeordnet, dass es bei Annäherung des Werkzeugs mit dem Codiermittel dahingehend zusammenwirken kann, dass es ein von der Art des Codiermittels abhängiges Signal an die Steuereinrichtung geben kann. Vorzugsweise ist das Sensormittel so angeordnet, dass es mit dem Codiermittel zusammenwirkt, wenn dieses in seine bestimmungsgemäße Montage- und Antriebsposition am Gehäusekörper des Werkzeuggeräts gebracht ist. Nach einer weiteren Ausführungsform der Erfindung ist das Codiermittel in Antriebsrichtung des Werkzeugs, insbesondere in konzentrischer Umfangsrichtung des Werkzeugs, variierend strukturiert, so dass das Codiermittel im angetriebenen Zustand des Werkzeugs gegenüber dem gehäusefesten Sensormittel je nach Orientierung des Werkzeugs ein unterschiedliches Sensorsignal induziert. Beispielsweise wäre es denkbar, dass das Codiermittel kreuzförmig oder sternförmig ausgebildet und insbesondere nahe einem Zentrum des Werkzeugs oder um das Zentrum des Werkzeugs herum angeordnet ist. Wenn das Sensormittel nahe an die Oberfläche des Werkzeugs heranreicht, so wird ein entsprechend der Drehstellung des Werkzeugs variierendes Sensorsignal erzeugt, das zu Steuerungszwecken verwendet werden kann. Wenn beispielsweise eine in Umfangsrichtung unterbrochene Struktur aus magnetischem oder magnetisierbarem Werkstoff als Codierung verwendet wird, so kann ein magnetischer Fluss je nach Orientierung des Werkzeugs gegenüber dem Sensormittel verstärkt oder geschwächt werden. Auch dies kann als auswertbares Signal verwendet werden. Solchenfalls können über unterschiedliche Strukturen der Codiermittel unterschiedliche werkzeugspezifische Eigenschaften codiert werden.

Es erweist sich als vorteilhaft und zweckmäßig, wenn das Sensormittel eine elektrische Spule umfasst, die einen magnetischen Fluss erfasst. Dieser magnetische Fluss verändert sich dann je nach Beschaffenheit und Ausbildung des Codiermittels bei einem jeweiligen Werkzeug. Das so ausgebildete Sensormittel kann in vorteilhafter Weise zusätzlich einen Dauermagneten umfassen, der für die elektrische Spule einen Ausgangswert für den magnetischen Fluss liefert.

Es wäre auch grundsätzlich denkbar, dass das Codiermittel und das Sensormittel eine Transponderanordnung bilden, wobei dies eine für viele Anwendungen eher zu teure Lösung darstellen würde.

Des Weiteren betrifft die Erfindung ein rotierend, oszillierend oder hin- und hergehend antreibbares Werkzeug mit den Merkmalen des Anspruchs 12, also ein Werkzeug, bei dem wenigstens eine werkzeugspezifische Eigenschaft, insbesondere dessen zulässige Höchstgeschwindigkeit, über ein vorausgehend beschriebenes Codiermittel berührungslos identifizierbar vorgesehen ist. Das Codiermittel bei dem erfindungsgemäßen Werkzeug kann in vorteilhafter Weise wie vorausgehend beschrieben ausgebildet sein. Der Schutz der vorliegenden Erfindung bezieht sich also auch auf ein entsprechend codiertes Werkzeug losgelöst von einem motorisch angetriebenen Werkzeuggerät.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: eine Draufsicht auf ein erfindungsgemäßes Werkzeug (schematisch); und
- Figur 2: eine Seitenansicht des Werkzeugs nach Figur 1 mit angedeuteter Antriebswelle nebst Flansch und Spannmutter bei einem nicht dargestellten erfindungsgemäßen Werkzeuggerät.

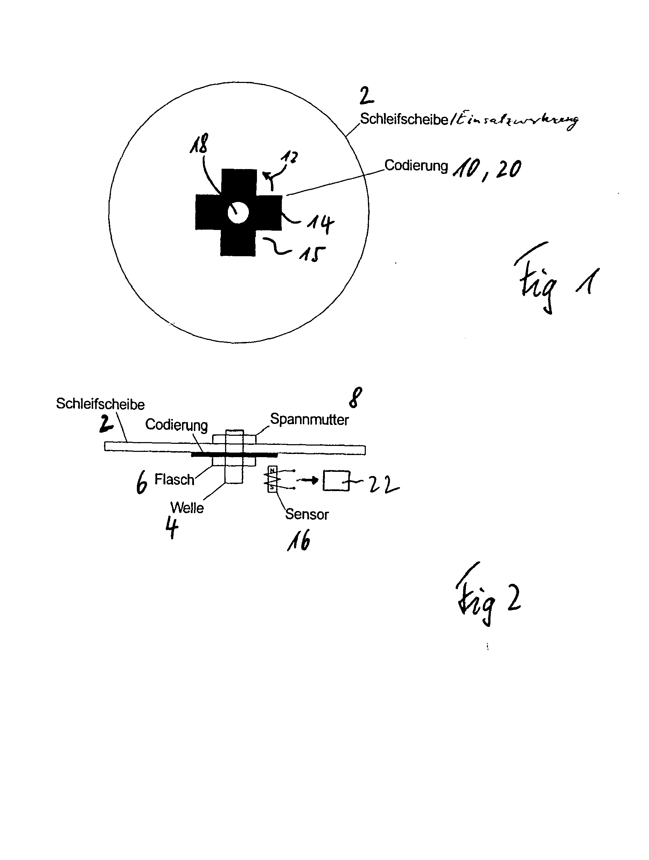

Die Figuren zeigen eine Ausführungsform eines erfindungsgemäßen Werkzeugs 2, in Form einer Schleif- oder Trennscheibe für ein als Ganzes nicht dargestelltes Werkzeuggerät, beispielsweise einen Winkelschleifer. Figur 2 zeigt lediglich schematisch eine Antriebswelle 4 dieses Werkzeuggeräts mit einem Montageflansch 6 und einer Spannmutter 8, zwischen denen die Schleifscheibe 2 drehfest mit der Welle 4 fixiert ist.

Das Werkzeug 2 trägt eine Codierung 10, die in einer konzentrischen Umfangsrichtung 12 des Werkzeugs variierend ausgebildet ist. Dies bedeutet, dass im vorliegend beispielhaft dargestellten Fall von der Codierung 10 erfasste Bereiche 14 mit frei bleibenden Bereichen 15 in Umfangsrichtung abwechseln. Auf diese Weise ist in Abhängigkeit der Drehstellung des Werkzeugs 2 ein Sensor 16, der in Figur 2 schematisch angedeutet ist, einem von der Codierung 10 erfassten Bereich 14 und einem hiervon frei bleibenden Bereich 15 abwechselnd gegenüberliegend. Die Codierung 10 ist im beispielhaft dargestellten Fall um ein Zentrum 18 der Schleifscheibe 2, welches von der Antriebswelle 4 gebildet ist, herum angeordnet und kreuzförmig ausgebildet. Diese Strukturierung der Codierung 10 ist aber rein beispielhaft. Es könnten auch sternförmige oder sonstige strukturierte Anordnungen des Codiermittels 10 verwendet werden. Durch breitere oder schmalere Strukturen könnte der von der Codierung erfasste Bereich 14 vergrößert oder verringert werden, wodurch das vom Sensor 16 an eine nicht dargestellte Steuereinrichtung des Werkzeuggeräts gelieferte Sensorsignal variiert wird.

Bei einer einfachen und daher besonders zweckmäßigen Ausführungsform umfasst die Codierung 10 ein magnetisches oder magnetisierbares, insbesondere ferromagnetisches Material 20. Wird ein Sensor 16, wie in Figur 2 angedeutet, in den Bereich der rotierenden Codierung 10 gebracht, so wird der magnetische Fluss verstärkt oder geschwächt. Dies führt zu einem auswertbaren Sensorsignal, mittels dessen das Codiermittel 10 identifizierbar ist und somit eine hierdurch codierte werkzeugspezifische Eigenschaft ermittelbar ist. In Abhängigkeit hiervon können dann durch eine Steuereinrichtung 22 des Werkzeuggeräts Steuervorgänge ausgelöst werden, also insbesondere eine Antriebsstufe bzw. Antriebsgeschwindigkeit für das betreffende Werkzeug gewählt werden.

## Patentansprüche

1. Motorisch angetriebenes Werkzeuggerät, insbesondere Handwerkzeuggerät, mit einem Gehäusekörper und einem am Gehäusekörper montierbaren und rotierend, oszillierend oder hin- und hergehend antreibbaren Werkzeug (2), insbesondere eine Schleif-, Trenn- oder Schruppscheibe, und mit einer elektrischen oder elektronischen Steuereinrichtung (22), **dadurch gekennzeichnet, dass** das Werkzeug (2) ein Codiermittel (10) aufweist, welches über ein mit der Steuereinrichtung (22) zusammenwirkendes Sensormittel (16) am Gehäusekörper des Werkzeuggeräts berührungslos identifizierbar ist, und dass über die Steuereinrichtung (22) in Abhängigkeit von der Identifizierung Steuerungsmaßnahmen ausführbar sind.

2. Werkzeuggerät nach Anspruch 1, **dadurch gekennzeichnet, dass** die Steuerungsmaßnahmen die Wahl einer Antriebsstufe für den motorischen Antrieb des Werkzeugs (2) umfassen.

3. Werkzeuggerät nach Anspruch 1, **dadurch gekennzeichnet, dass** die Steuerungsmaßnahmen die Anzeige der Identifizierung umfassen.

4. Werkzeuggerät nach Anspruch 1, **dadurch gekennzeichnet, dass** die Steuerungsmaßnahmen die Anzeige eines Warnhinweises umfassen.

5. Werkzeuggerät nach einem der vorstehenden Ansprüche, **dadurch gekennzeichnet, dass** das Codiermittel (10) zur Unterscheidung zweier verschiedener maximaler Antriebsgeschwindigkeiten dient.

6. Werkzeuggerät nach einem der vorstehenden Ansprüche, **dadurch gekennzeichnet, dass** das Codiermittel (10) ein magnetisches oder magnetisierbares Material (20) umfasst.

7. Werkzeuggerät nach einem der vorstehenden Ansprüche, **dadurch gekennzeichnet, dass** das Codiermittel (10) in Antriebsrichtung (12) des Werkzeugs (2), insbesondere in konzentrischer Umfangsrichtung, variierend strukturiert ist.

8. Werkzeuggerät nach einem der vorstehenden Ansprüche, **dadurch gekennzeichnet, dass** das Codiermittel (10) nahe einem Zentrum (18) des Werkzeugs (2) oder um das Zentrum herum angeordnet ist.

9. Werkzeuggerät nach einem der vorstehenden Ansprüche, **dadurch gekennzeichnet, dass** das Sensormittel (16) eine elektrische Spule umfasst, die einen magnetischen Fluss erfasst.

10. Werkzeuggerät nach einem der vorstehenden Ansprüche, **dadurch gekennzeichnet, dass** das Sensormittel (16) einen Dauermagneten umfasst.

11. Werkzeuggerät nach einem der vorstehenden Ansprüche, **dadurch gekennzeichnet, dass** das Codiermittel und das Sensormittel eine Transponderanordnung bilden.

12. Werkzeuggerät nach einem der vorstehenden Ansprüche, **dadurch gekennzeichnet, dass** es ein Winkelschleifer ist.

13. Rotierend, oszillierend oder hin- und hergehend antreibbares Werkzeug (2), insbesondere Schleif-, Trenn- oder Schruppscheibe, für ein motorisch angetriebenes Werkzeuggerät mit einem Gehäusekörper und mit einer elektrischen oder elektronischen Steuereinrichtung, **gekennzeichnet durch** ein Codiermittel (10), welches über ein mit der Steuereinrichtung (22) zusammenwirkendes Sensormittel (16) am Gehäusekörper des Werkzeuggeräts berührungslos identifizierbar ist.
